# EUROPEAN PATENT SPECIFICATION

(11) **EP 3 960 970 B1**
(45) Date of publication and mention of the grant of the patent: **31.01.2024**
(21) Application number: 20795640.0
(22) Date of filing: 27.04.2020
(51) Int. Cl.: B60L 53/16, H01R 13/70, E05B 81/18, E05B 81/66, E05B 83/34, E05B 81/06, E05B 81/34, E05B 85/02

(54) **LOCKING DEVICE**
SPERRVORRICHTUNG
DISPOSITIF DE VERROUILLAGE

(30) Priority: 26.04.2019 JP 2019085060
(43) Date of publication of application: 02.03.2022
(73) Proprietor: HI-LEX Corporation, Takarazuka-shi, Hyogo 665-0845 (JP)
(72) Inventor: SUGIYAMA, Yoshitaka, Takarazuka-shi, Hyogo 665-0845 (JP)
(74) Representative: Bjerkén Hynell KB
(86) International application number: PCT/JP2020/017933
(87) International publication number: WO 2020/218603

(56) References cited:
- DE-A1-102013 106 220
- IT-A1- UB20 159 755
- JP-A- 2012 090 706
- JP-A- 2014 120 231
- JP-A- 2014 239 617
- US-A1- 2014 170 890
- US-A1- 2014 285 148
- US-A1- 2015 114 052

## Description

### Technical Field

The present invention relates to a locking device.

### Background Art

In recent years, electric vehicles, plug-in hybrid electric vehicles, and the like have become widely used. When the remaining capacity of batteries of these vehicles is reduced, the batteries are charged in charging facilities.

Battery charging is performed by connecting a power supply cable extending from a charging facility to a power supply port of a vehicle body (for example, see Japanese Patent Application Laid-Open No. 2014-121109).

Said document discloses a locking device that locks a power supply cable to a vehicle body in order to prevent e.g. replacement or theft of the power supply cable during battery charging time.

US2015114052 discloses a lid locking device which has detection means for detecting the position of a locking member..

### Summary of Invention

### Technical Problem

However, a space for disposing the locking device in the vehicle body is limited.

Accordingly, when intending to detect a position of a lock pin, which moves with a short stroke, by using a limit switch or the like, the position may not be accurately detected in a case where the lock pin rattles. In a case where the position cannot be properly detected by using a limit switch or the like due to rattling of the lock pin, it is difficult to detect whether the power supply cable is locked, and e.g. control in which safety is confirmed becomes difficult to perform.

An object of the present invention is to provide a locking device in which rattling of a lock pin is suppressed.

### Solution to Problem

A locking device having the features of claim 1 provides a solution to the above-mentioned problem.

Thus, the movement of the locking member in the direction including the component of the perpendicular direction to the operation surface is regulated when the locking member moves, and thereby it is possible to suppress separation of the detection switch from the operation surface of the locking member in a direction in which the detection switch may be incapable of performing accurate detection.

Accordingly, it is possible to suppress rattling of the lock pin.

Since rattling of the lock pin is suppressed, the accuracy of detection by the detection switch improves. In a case where the stroke of the locking member is short, the detection switch easily fails to perform accurate detection even due to slight rattling when the locking member moves, and thus the effect of the present invention can also be further exhibited.

A further embodiment of the invention may include the additional feature that the guided part may be a groove part provided substantially parallel to a movement direction of the lock pin. The guide part may be fitted into the groove part, and may slide with the guided part when the locking member moves between the unlock position and the lock position.

Thus, the groove part is formed in the locking member and, when the locking member moves, the groove part slides with the guide part, and thereby it is possible to regulate the movement of the locking member in the direction including the component of the perpendicular direction to the operation surface.

In a further embodiment of the invention the device may additionally include the operation surface may face the detection part. The operation surface may be inclined so as to approach the detection part as the operation surface is away from a side of the hole formation part. When the locking member moves to the lock position, the detection part may be pushed by the operation surface to be in the ON state.

Thus, the detection part is pressed by the operation surface, and thereby it is possible to detect the position of the locking member by using the detection part.

In another embodiment of the invention the device may additionally include the feature that the lock pin may include a leading end part and a rear end part, where the leading end part engages with the object that is locked, and the rear end part is provided on a side opposite to the leading end part. The locking member may include a lock body including a connection part, where the connection part is connected to the rear end part of the lock pin. The guided part may be provided in the lock body so as to extend from a side of the connection part of the lock body toward an opposite side in the movement direction of the locking member. The operation surface may be provided on a side surface of the lock body.

Thus, since the guided part of the locking member slides with the guide part when the locking member moves, it is possible to regulate the movement of the locking member in the direction including the component of the perpendicular direction to the operation surface, and it is possible to suppress the separation of the detection switch from the operation surface of the locking member in the direction in which the detection switch may be incapable of performing accurate detection.

In yet another embodiment of the invention the device may additionally include the feature that the groove part may include an open end part in an end part of the lock body, where the open end part has a notch shape and the end part faces the hole formation part. The guide part may be a rib erected from the hole formation part. The groove part may have a groove width substantially identical to a thickness of the rib.

Thus, since the groove part of the locking member slides with the rib when the locking member moves, it is possible to regulate the movement of the locking member in the direction including the component of the perpendicular direction to the operation surface, and it is possible to suppress the separation of the detection switch from the operation surface of the locking member in the direction in which the detection switch may be incapable of performing accurate detection.

### Advantageous Effects of Invention

According to the present invention, it is possible to provide a locking device capable of detecting a position of a lock pin accurately.

### Brief Description of Drawings

FIG. 1 illustrates an example of placement of a locking device in an embodiment according to the present invention;
FIG. 2A is an external view of the locking device viewed from a side where a lock pin protrudes, and FIG. 2B is a partially enlarged view illustrating a state in which the lock pin protrudes from a housing;
FIG. 3 is a perspective view illustrating an internal configuration of the locking device of FIG. 1;
FIG. 4 is a plan view of FIG. 3;
FIG. 5 is a perspective view of the locking device of FIG. 1 in a state in which a locking member is removed from a first housing portion;
FIG. 6 is a plan view of FIG. 5;
FIG. 7A is a perspective view of the locking member of FIG. 1 viewed from a side where an operation surface is formed, and FIG. 7B is a perspective view of the locking member of FIG. 7A viewed from the opposite side;
FIG. 8A is a plan view of the locking member of FIG. 7A, FIG. 8B is a front view of the locking member of FIG. 8A, and FIG. 8C is a bottom plan view of the locking member of FIG. 8A;
FIG. 9 illustrates a state in which the locking member is disposed in a guide part of FIG. 5;
FIG. 10A illustrates a positional relationship between the locking member and the guide part at an unlock position, and FIG. 10B illustrates a positional relationship between the locking member and the guide part at a lock position; and
FIG. 11A is a schematic view illustrating an arrangement relationship between the locking member and the detection switch at the unlock position, and FIG. 11B is a schematic view illustrating an arrangement relationship between the locking member and the detection switch at the lock position.

### Description of Embodiments

Hereinafter, a locking device of an embodiment according to the present invention will be described with reference to the accompanying drawings.

### (Summary of Locking Device)

A locking device of the present embodiment can be used for locking a power supply cable (an example of an object) connected to a power supply port of a vehicle body. The locking device is generally provided in a vehicle body, but the placement location thereof is not limited as long as the locking device is capable of locking a power supply cable. The locking device may not lock a power supply cable itself, and may also lock a member connected to a power supply cable. As will be described in detail later, the locking device prevents a power supply cable from being detached from a power supply port by causing a lock pin to protrude and regulating movement of the power supply cable. Note that, the locking device can also be used as a locking device, such as a locking device for a fuel lid, which suppresses movement of an object by forward movement of a pin.

Next, an example of placement of the locking device will be described hereinafter.

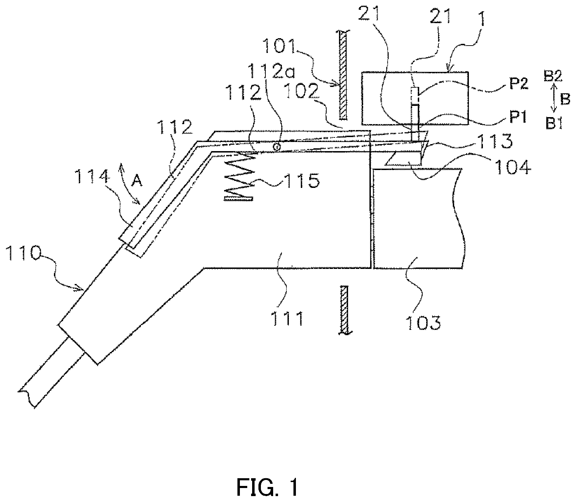

FIG. 1 illustrates an example of placement of locking device 1. As illustrated in FIG. 1, for example, vehicle 101 including a battery as a driving source includes a charging system mounted thereon, which is capable of charging the battery of vehicle 101 by an external power supply. A side surface of vehicle 101 is provided with power supply port 102 into which charging connector 110 provided in a power supply cable is inserted. Power supply port 102 includes inlet 103 disposed therein. Locking projection 104, which is locked by lock arm 112 to be described later, is provided above inlet 103 of vehicle 101. Further, locking device 1 of the present embodiment is disposed above locking projection 104. As an example, locking device 1 is disposed such that lock pin 21 thereof moves along an up-down direction. Note that, the placement of locking device 1 is not limited thereto, and the location and posture thereof may be changed as appropriate in accordance with the object that is locked.

Power supply plug 111 connected to inlet 103 is provided at a leading end of charging connector 110. Power supply plug 111 is provided with lock arm 112 that functions as a retainer when power supply plug 111 is connected to inlet 103.

Lock arm 112 includes claw part 113 on a side of a leading end thereof, and operation part 114 on a side of a root thereof. Lock arm 112 is provided so as to be turnable around turning shaft 112a provided between claw part 113 and operation part 114 (see arrow A). Energization member 115 whereby claw part 113 is energized so as to turn downward is attached to lock arm 112.

When power supply plug 111 is mounted to inlet 103, power supply plug 111 is inserted toward inlet 103, and thereby claw part 113 abuts on a slope of locking projection 104. When power supply plug 111 is further inserted against an energizing force of lock arm 112 by energization member 115, claw part 113 is guided to the slope of locking projection 104, and claw part 113 is hooked to locking projection 104.

When power supply plug 111 is detached, on the other hand, operation part 114 is held, and thereby lock arm 112 turns around turning shaft 112a, claw part 113 is lifted up (see the two-dot chain line), and the locking to locking projection 104 is released. Thus, it is possible to detach power supply plug 111 from inlet 103.

Locking device 1 of the present embodiment is provided above locking projection 104. Locking device 1 moves lock pin 21, for example, in the up-down direction (the direction of arrow B). In FIG. 1, in a state in which claw part 113 is locked to locking projection 104, locking device 1 moves lock pin 21 to lock position P1 (the solid line) on an upper side of lock arm 112 (in the direction of arrow B1), thereby regulating turning of lock arm 112 by an operation of operation part 114. Further, when power supply plug 111 is detached from inlet 103, locking device 1 moves lock pin 21 to unlock position P2 (the two-dot chain line) above lock position P1 (in the direction of arrow B2) to release the regulation of turning of lock arm 112.

In FIG. 1, lock position P1 is provided below unlock position P2, but the arrangement of lock position P1 and unlock position P2 are not limited thereto. For example, lock position P1 may be provided above unlock position P2, or lock position P1 and unlock position P2 may be disposed left and right, depending on a position of a member to be regulated.

### (Configuration of Locking Device)

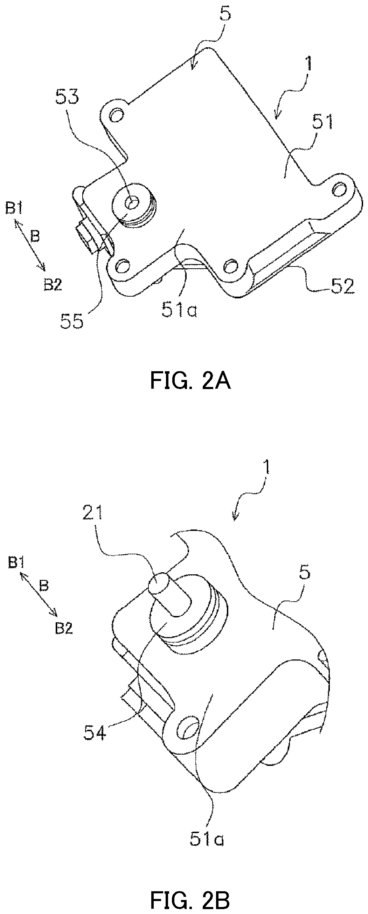

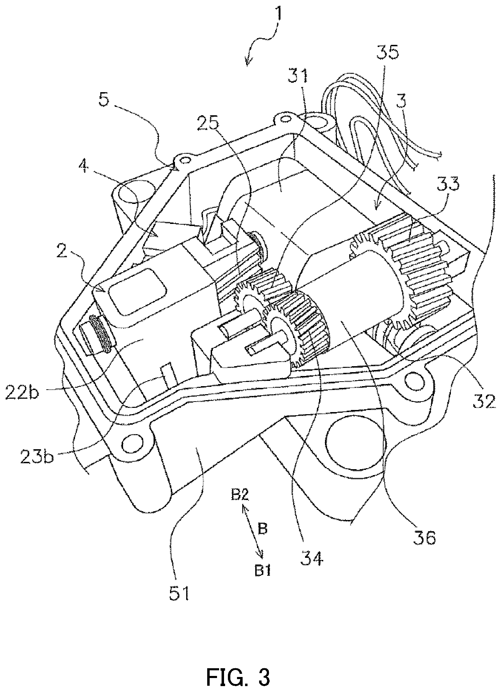

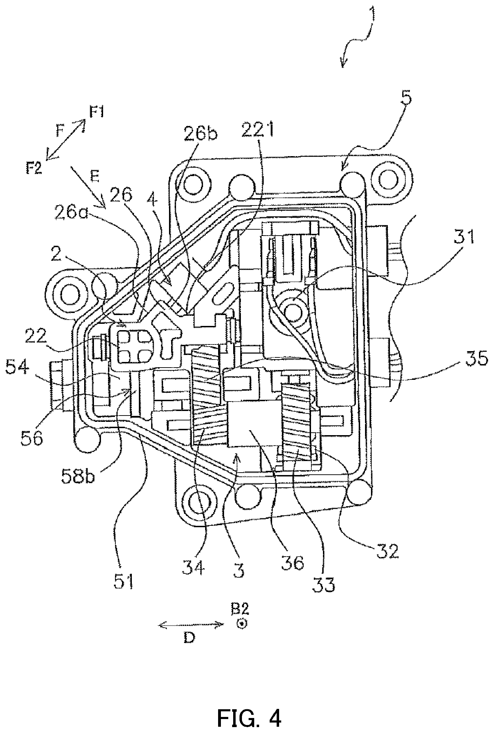

FIG. 2A is an external view of locking device 1 viewed from a side where lock pin 21 protrudes. FIG. 2B is a partially enlarged view illustrating a state in which the lock pin protrudes from a housing. FIG. 3 is a perspective view illustrating an internal configuration of locking device 1. Note that, the drawings indicate the direction of B1 and the direction of B2. FIG. 4 is a plan view of FIG. 3.

Locking device 1 includes locking member 2, driving mechanism 3, detection switch 4, and housing part 5. Locking member 2 is movable between lock position P1, where movement of an object is regulated, and unlock position P2, where regulation of the movement of the object is released. As the object, it is possible to mention charging connector 110, but the object is not limited thereto.

Driving mechanism 3 moves locking member 2. Driving mechanism 3 is only required to be capable of moving locking member 2. In the present embodiment, driving mechanism 3 includes a motor and a gear, for example, but the configuration of driving mechanism 3 is not limited thereto.

Detection switch 4 detects a position of locking member 2. As detection switch 4, in the present embodiment, it is possible to use, for example, a limit switch or the like, but detection switch 4 is not limited thereto as long as the position of locking member 2 can be detected.

Housing part 5 movably supports locking member 2. In the present embodiment, housing part 5 includes, as an example, locking member 2, driving mechanism 3, and detection switch 4, but the configuration of housing part 5 is not limited thereto. For example, part of driving mechanism 3 may be provided outside housing part 5. In short, as long as housing part 5 is capable of movably supporting locking member 2, it can be appropriately changed whether housing part 5 includes any other configuration or not, depending on a surrounding configuration of housing part 5 or the like. Housing part 5 may be a part of the vehicle body of vehicle 101.

### (Housing Part)

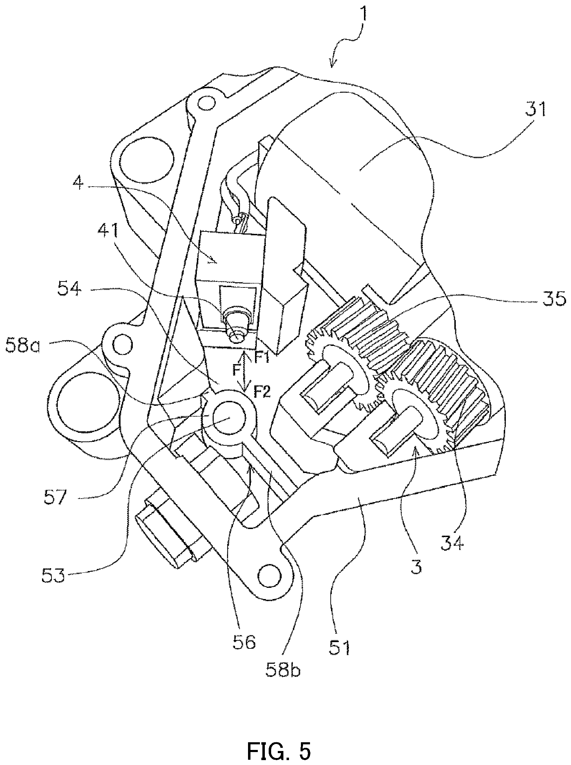

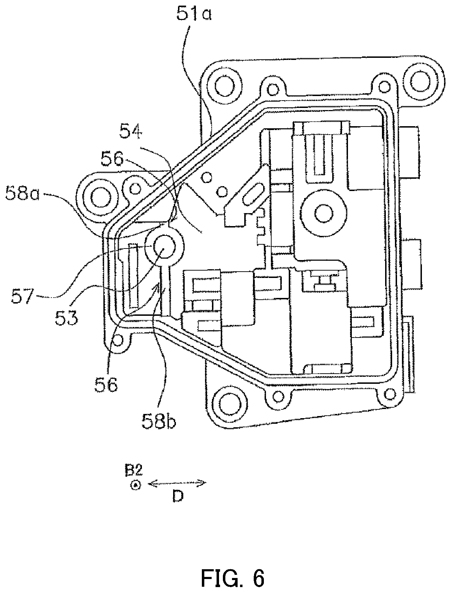

FIG. 5 is a perspective view illustrating a state in which locking member 2 is removed from first housing portion 51. FIG. 6 is a plan view of FIG. 5.

### Housing part 5 movably supports locking member 2.

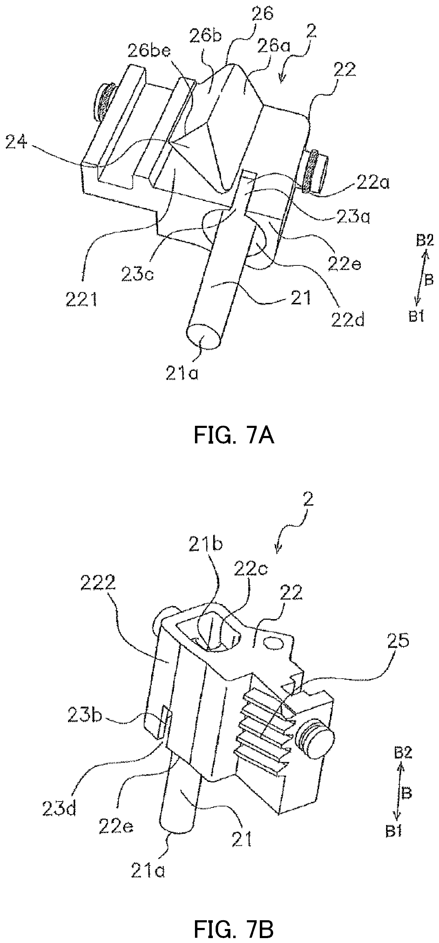

Housing part 5 includes guide part 56. Guide part 56 guides movement of locking member 2. In the present embodiment, guide part 56 is formed as a rib, for example. As an example, fitted parts 22a and 22b (see FIG. 7A and FIG. 7B to be described later) that are groove parts are formed in locking member 2 that is guided by the rib. Conversely, a groove part(s) may be formed in guide part 56, and a protrusion part(s) that is/are fitted into the groove part(s) may be formed in locking member 2. The shape of guide part 56 is not limited as long as guide part 56 is capable of guiding locking member 2 along movement direction B.

As an example, housing part 5 includes first housing portion 51 and second housing portion 52 as illustrated in FIG. 2A and FIG. 3. First housing portion 51 has a substantially box shape, and locking member 2, driving mechanism 3, and detection switch 4 are disposed therein. Second housing portion 52 is a member which has a substantially lid shape and which covers first housing portion 51. FIG. 3 can also be said to illustrate a state in which second housing portion 52 is detached from first housing portion 51.

As illustrated in FIG. 5, first housing portion 51 includes hole formation part 54 in which through-hole 53 is formed. Hole formation part 54 is, for example, a bottom surface of first housing portion 51 illustrated in FIG. 5, but the shape thereof is not limited to a surface shape. Further, hole formation part 54 may not be a bottom surface as long as hole formation part 54 is a surface of the housing part, in which the surface is formed on the side where lock pin 21 protrudes. Note that, as illustrated in FIG. 2A, hole formation part 54 includes column-like protrusion part 55 outside hole formation part 54, and through-hole 53 is formed in the center of column-like protrusion part 55. Column-like protrusion part 55 described above may not be particularly provided, but has functions of guiding lock pin 21, and of protecting lock pin 21 from the outside.

Guide part 56 extends from hole formation part 54 in a direction substantially parallel to movement direction B2 of locking member 2 from lock position P1 toward unlock position P2. For example, as illustrated in FIG. 5 and FIG. 6, guide part 56 is a portion erected from hole formation part 54 forming the bottom surface. In the present embodiment, guide part 56 has a rib shape.

Guide part 56 is only required to be capable of guiding movement of locking member 2, and includes, for example, pin guide rib part 57 that guides lock pin 21 of locking member 2, and fitting parts 58a and 58b that are fitted into fitted parts 22a and 22b (see FIG. 7A and FIG. 7B) of guided parts 23a and 23b of locking member 2. In the present embodiment, guide part 56 extends in a direction parallel to an axis of through-hole 53. Further, guide part 56 has a plate shape, and includes two surfaces which form front and rear surfaces, and which are parallel to the axis of through-hole 53. Guide part 56 is provided on both sides of pin guide rib part 57 with pin guide rib part 57 therebetween.

Pin guide rib part 57 has a tubular shape, and lock pin 21 of locking member 2 is inserted therethrough. Fitting parts 58a and 58b, which will be described in detail later, are fitted into fitted parts 22a and 22b of guided parts 23a and 23b of locking member 2 to regulate movement of locking member 2 in a direction including a component of perpendicular direction G (see FIG. 1 1A to be described later) to operation surface 24 when locking member 2 moves.

Two fitting parts 58a and 58b are arranged with pin guide rib part 57 therebetween, for example. In a plan view, fitting parts 58a and 58b are arranged in a straight line with pin guide rib part 57 therebetween. Note that, in the present embodiment, two fitting parts 58a and 58b are provided as an example, but only one of them may be provided. Further, in that case, only one of the guided parts to be described later may be provided, and only one of the fitted parts to be described later may be provided. Further, the positions of fitting parts 58a and 58b may be changed as appropriate depending on the positions of fitted part 22a and 22b of locking member 2.

### (Locking Member)

Locking member 2 is movable between lock position P1, where movement of an object is regulated, and unlock position P2, where regulation of the movement of the object is released. Locking member 2 is movably supported by housing part 5.

Locking member 2 is only required to be capable of regulating movement of an object, and the shape of locking member 2 or the like is not limited. As the object whose movement is regulated, it is possible to mention the power supply cable described above, for example, but the object may not be the power supply cable itself, and a member connected to the power supply cable may be locked.

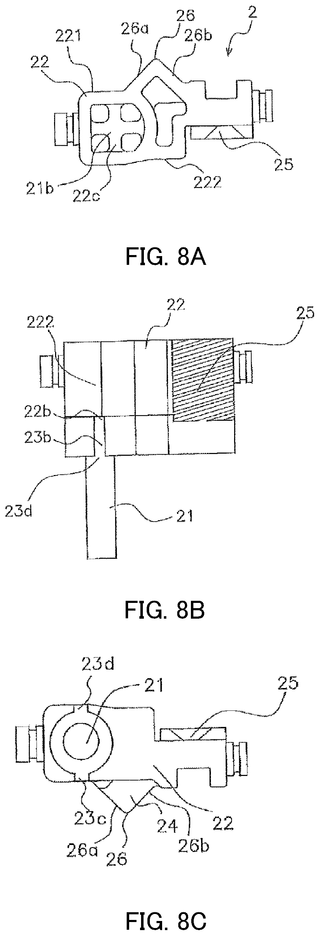

The shape of locking member 2 is not limited as long as locking member 2 can be driven by driving mechanism 3, but a configuration illustrated in FIG. 7A, FIG. 7B, and FIG. 8A to FIG. 8C is used, for example. FIG. 7A is a perspective view of locking member 2 viewed from a side where operation surface 24 is formed. FIG. 7B is a perspective view of locking member 2 of FIG. 7A viewed from the opposite side. FIG. 8A is a plan view of locking member 2. FIG. 8B is a front view of locking member 2. FIG. 8C is a bottom plan view of locking member 2.

Locking member 2 includes lock pin 21, lock body 22, operation surface 24, and transmission part 25.

### (Lock Pin)

Lock pin 21, at least at lock position P1, protrudes from through-hole 53 formed in housing part 5. Note that, at unlock position P2, lock pin 21 may or may not protrude from through-hole 53. Lock pin 21 is, for example, a column-like member, and is formed along movement direction B of locking member 2. Lock pin 21 includes leading end part 21a that regulates movement of lock arm 112 of the power supply cable, and rear end part 21b provided on a side opposite to leading end part 21a. In the present embodiment, leading end part 21a only regulates movement of lock arm 112, and thus the shape of leading end part 21a is a simple column. However, leading end part 21a may have a shape including a locking projection or the like which is locked to the object that is locked. Lock pin 21 moves from unlock position P2 such that leading end part 21a is separated from housing part 5 by a predetermined distance at lock position P1. Lock pin 21 is only required to be capable of moving by a distance that allows charging connector 110 to be connected to inlet 103.

### (Lock Body)

Lock body 22 is connected to lock pin 21, and lock pin 21 also moves in accordance with movement of lock body 22. For lock body 22, the shape illustrated in FIG. 7 and FIG. 8 is used, for example. Lock body 22 has a substantially rectangular parallelepiped shape, and hole part 22d including a column-like space, where lock pin 21 is disposed, is formed in lock body 22. Lock pin 21 is disposed in hole part 22d, and is connected to lock body 22 at rear end part 21b of lock pin 21. In the present embodiment, lock pin 21 is fixed to lock body 22.

Lock body 22 includes first side surface 221, second side surface 222, and connection part 22c. Connection part 22c is connected to rear end part 21b of lock pin 21.

First side surface 221 and second side surface 222 extend along an axial direction of lock pin 21, and are arranged with lock pin 21 therebetween. First side surface 221 includes guided part 23a. Second side surface 222 includes guided part 23b. Guided parts 23a and 23b are disposed so as to face lock pin 21. Either one of guided parts 23a and 23b may be provided as long as lock body 22 can be guided without rattling. In first side surface 221, operation surface 24 is provided side by side with guided part 23a. Further, in second side surface 222, transmission part 25 is provided side by side with guided part 23b.

A space of hole part 22d is formed between a side surface of lock pin 21 and lock body 22, and a space is formed between lock pin 21 and guided part 23a and between lock pin 21 and guided part 23b. In this space around lock pin 21, pin guide rib part 57 (see FIG. 5) of guide part 56 of housing part 5 is disposed.

### (Guided Part)

Guided parts 23a and 23b are formed along movement direction B of locking member 2. Guided parts 23a and 23b approach hole formation part 54 (see FIG. 5), in which through-hole 53 of housing part 5 is formed, in accordance with movement of locking member 2 from unlock position P2 to lock position P1.

Further, guided parts 23a and 23b are provided in lock body 22 so as to extend from a side of connection part 22c of lock body 22 toward an opposite side in movement direction B2 of locking member 2 from lock position P1 to unlock position P2.

Guided part 23a includes fitted part 22a into which fitting part 58a of guide part 56 is fitted. Further, guided part 23b includes fitted part 22b into which fitting part 58b of guide part 56 is fitted.

In the present embodiment, guided parts 23a and 23b are provided in a notch shape. Guided part 23a includes a one-side edge part and an other-side edge part with a space therebetween, where fitting part 58a is inserted through the space. Guided part 23b includes a one-side edge part and an other-side edge part with a space therebetween, where fitting part 58b is inserted through the space. The one-side edge part and the other-side edge part include a sliding surface slidable with front and rear surfaces of guide part 56, respectively. Note that, in the present embodiment, guided part 23a is provided continuously to fitted part 22a as a groove having a notch shape, and guided part 23b is provided continuously to fitted part 22b as a groove having a notch shape. Guided parts 23a and 23b may be provided separately from fitted parts 22a and 22b. For example, in first side surface 221 and second side surface 222, guided parts 23a and 23b may be provided as surfaces slidable with an inner surface of housing part 5. Guided part 23a includes open end part 23c which has a notch shape and which is provided on a side of hole formation part 54 of lock body 22. Guided part 23b includes open end part 23d which has a notch shape and which is provided on the side of hole formation part 54 of lock body 22.

### (Fitted Part)

Fitted part 22a is, for example, a groove part provided substantially parallel to movement direction B of lock pin 21. Fitted part 22b is, for example, a groove part provided substantially parallel to movement direction B of lock pin 21.

For example, fitted part 22a is formed on a side opposite to end part 22e with respect to guided part 23a along movement direction B from end part 22e of lock body 22, where end part 22e faces hole formation part 54. Fitted part 22a includes a flat surface part which abuts on an end surface of fitting part 58a provided at a leading end of guide part 56, and which faces the axial direction of lock pin 21.

Further, for example, fitted part 22b is formed on the side opposite to end part 22e with respect to guided part 23b along movement direction B from end part 22e of lock body 22, where end part 22e faces hole formation part 54. Fitted part 22a includes a flat surface part which abuts on an end surface of fitting part 58a provided at the leading end of guide part 56, and which faces the axial direction of lock pin 21. Fitted part 22a has a width that is substantially the same as the width of fitting part 58a, and fitted part 22b has a width that is substantially the same as the width of fitting part 58b. Further, separately from guided parts 23a and 23b, fitted parts 22a and 22b may be provided as portions protruding from lock body 22, for example.

Guide part 56 of housing part 5 described above is fitted into fitted parts 22a and 22b that are groove parts. When locking member 2 moves between unlock position P2 and lock position P1, guide part 56 slides with guided parts 23a and 23b. Fitting part 58a of guide part 56 is fitted into fitted part 22a via open end part 23c, and fitting part 58b of guide part 56 is fitted into fitted part 22b via open end part 23d. Thus, guide part 56 is slidable with guided parts 23a and 23b. Note that, in the present embodiment, fitting part 58a is provided on a side of an end part of guide part 56 which is provided to be erected from hole formation part 54.

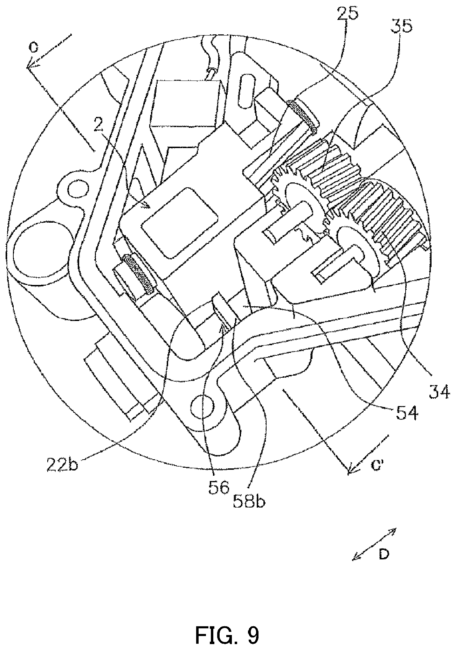

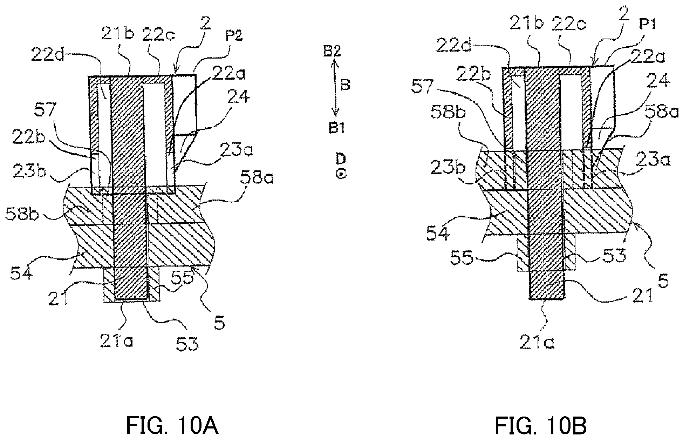

Locking member 2 is disposed so as to be fitted into guide part 56. FIG. 9 illustrates a state in which locking member 2 is disposed in guide part 56. FIG. 10A is a schematic view illustrating a positional relationship between locking member 2 and guide part 56 at unlock position P2. FIG. 10B illustrates a positional relationship between locking member 2 and guide part 56 at lock position P1. FIG. 10A and FIG. 10B are arrow cross-sectional views taken along a line C-C' in FIG. 9.

As illustrated in the drawings, locking member 2 is disposed in guide part 56 such that lock pin 21 is inserted into through-hole 53, that fitting part 58a is fitted into fitted part 22a, and that fitting part 58b is fitted into fitted part 22b. When locking member 2 moves from lock position P1 (see FIG. 10A) to unlock position P2 (see FIG. 10B) by driving mechanism 3 to be described later, locking member 2 moves while fitted part 22a slides with fitting part 58a and fitted part 22b slides with fitting part 58b. It is due to this sliding that rattling in width direction D of fitting parts 58a and 58b (see FIG. 6) in accordance with movement of locking member 2 is regulated. Further, since fitted parts 22a and 22b are caused to slide with fitting parts 58a and 58b within a range in a longitudinal direction of lock pin 21 by utilizing the stroke of locking member 2, it is not necessary to lengthen locking member 2 in movement direction B, and it is possible to suppress the thickness of locking device 1.

Note that, in the present embodiment, fitting parts 58a and 58b that are ribs as an example are formed, with pin guide rib part 57 therebetween, so as to connect between side walls of first housing part 51a as illustrated in FIG. 6. However, fitting parts 58a and 58b may be formed only in portions where fitting parts 58a and 58b are at least fitted into fitted parts 22a and 22b.

### (Operation Surface)

Operation surface 24 puts detection part 41 of detection switch 4 in an ON state or an OFF state in accordance with movement of locking member 2. Operation surface 24 faces detection part 41. Operation surface 24 is inclined so as to approach detection part 41 as operation surface 24 is away from the side of hole formation part 54. It is due to this inclination that when locking member 2 moves to lock position P1, detection part 41 is pushed by operation surface 24 to be in the ON state. Note that, since operation surface 24 is only required to be capable of putting detection part 41 of detection switch 4 in the ON state or the OFF state, the shape of operation surface 24 may not be limited to an inclined surface, but may be a shape in which operation surface 24 partially protrudes. Further, detection part 41 may not necessarily be pushed by operation surface 24 to be in the ON state at lock position P1. It may also be configured such that detection part 41 is released from operation surface 24 to be in the OFF state at lock position P1, and that movement of locking member 2 to lock position P1 is detected by detecting the OFF state.

For example, as illustrated in FIG. 7A, operation surface 24 is provided on a surface of first side surface 221. Operation surface 24 is formed by one surface of protrusion part 26 provided on first side surface 221. Further, operation surface 24 is provided so as to face a side of a leading end of lock pin 21, and slides with detection part 41 of detection switch 4 in accordance with movement of locking member 2 to the side of hole formation part 54.

In a plan view of FIG. 8A, protrusion part 26 has a triangular shape formed by first surface 26a and second surface 26b, and protrudes outside guided part 23a of first side surface 221. First surface 26a indicates a surface on a side of fitted part 22a, and second surface 26b indicates a surface on a side opposite to fitted part 22a. First surface 26a and second surface 26b are formed along movement direction B.

As illustrated in FIG. 7A, operation surface 24 is inclined so as to approach guided part 23a toward end part 22e from end 26be of second surface 26b on a side facing hole formation part 54.

Note that, as described later, operation surface 24 is only required to be capable of switching between the ON state and the OFF state of detection part 41 of detection switch 4, and thus operation surface 24 may be formed based on the arrangement relationship between operation surface 24 and detection switch 4, and the shape of operation surface 24 may not be limited to the shape as illustrated in FIG. 7A.

### (Transmission Part)

A driving force from driving mechanism 3 is transmitted to transmission part 25. Locking member 2 moves between lock position P1 and unlock position P2 by transmission of a driving force from driving mechanism 3 to transmission part 25. Transmission part 25 has, for example, a gear shape, and is formed, as illustrated in FIG. 7B, on second side surface 222 of lock body 22.

Each of a plurality of teeth of the gear shape of transmission part 25 is formed on a surface of guided part 23b along a direction substantially perpendicular to movement direction B. Further, the plurality of teeth is generally arranged side by side along movement direction B.

Note that, the configuration of transmission part 25 can be appropriately changed by the configuration of driving mechanism 3 to be described later.

### (Driving Mechanism)

Driving mechanism 3 moves locking member 2 between lock position P1 and unlock position P2. Driving mechanism 3 transmits a driving force to locking member 2 by an electrical command. Driving mechanism 3 is only required to be capable of transmitting a driving force to transmission part 25 of locking member 2.

As an example, driving mechanism 3 includes motor 31, worm 32, worm gear 33, first transmission gear 34, and second transmission gear 35 as illustrated in FIG. 3.

Motor 31 is disposed such that a rotation shaft of motor 31 is in a direction substantially perpendicular to movement direction B of locking member 2. Worm 32 is attached to the rotation shaft of motor 31. Worm gear 33 meshes with worm 32, and a conversion of the rotation direction is performed therein. First transmission gear 34 is connected to worm gear 33 at connection shaft part 36, and rotates coaxially with worm gear 33. Second transmission gear 35 meshes with first transmission gear 34. A rotation shaft of second transmission gear 35 is disposed parallel to first transmission gear 34. Second transmission gear 35 meshes with the gear shape of transmission part 25 of locking member 2.

Thus, when a driving signal is transmitted to motor 31, worm 32 rotates together with the rotation shaft of motor 31, and worm gear 33 rotates in accordance with the rotation of worm 32. When first transmission gear 34 rotates by the rotation of worm gear 33, second transmission gear 35 rotates, and locking member 2 moves along movement direction B by the meshing of second transmission gear 35 with transmission part 25.

Driving mechanism 3 may have a configuration in which gears and gear wheels are used as illustrated in FIG. 3, but the configuration of driving mechanism 3 is not limited thereto, and a ball screw or the like may be used. As illustrated in FIG. 3, by disposing the rotation shaft of each configuration to be substantially perpendicular to movement direction B, it is possible to suppress the thickness of locking device 1 along movement direction B.

### (Detection Switch)

Detection switch 4 detects the position of locking member 2. Detection switch 4 includes detection part 41. Detection part 41 is in the ON state or the OFF state in accordance with movement of locking member 2. As detection switch 4, it is possible to use a limit switch, for example, but detection switch 4 is not limited thereto.

For example, as illustrated in FIG. 4, detection switch 4 is disposed on a side of first side surface 221 of locking member 2. Further, as illustrated in FIG. 5, detection part 41 is provided so as to face first side surface 221 of locking member 2. Detection part 41 moves in direction F substantially perpendicular to movement direction B of locking member 2. When detection part 41 moves to a side of locking member 2 (arrow F2), detection part 41 is in the OFF state. When detection part 41 is pushed by locking member 2 to move to a side opposite to locking member 2 (arrow F1), detection part 41 is in the ON state.

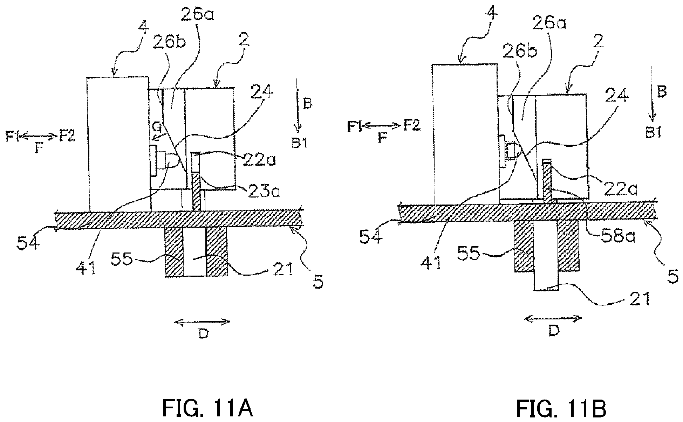

FIG. 11A and FIG. 11B are schematic views each illustrating an arrangement relationship between locking member 2 and detection switch 4 viewed along a direction of arrow E indicated in FIG. 4. Arrow E is a direction which is substantially perpendicular to movement direction B and which is substantially parallel to operation surface 24. FIG. 11A illustrates a state in which locking member 2 is disposed at unlock position P2. FIG. 11B illustrates a state in which locking member 2 is disposed at lock position P1.

As illustrated in FIG. 11A, in the state in which locking member 2 is disposed at unlock position P2, detection part 41 of detection switch 4 is in contact with operation surface 24, but is not pressed thereby, and is in the OFF state. As illustrated in FIG. 11B, when locking member 2 moves downward by driving of driving mechanism 3, detection part 41 is pushed by operation surface 24 (the direction of arrow F1) to be in the ON state since operation surface 24 is inclined so as to approach detection part 41 as operation surface 24 is away from the side of hole formation part 54. Thus, detection part 41 is in the ON state, and thereby it is possible to detect that locking member 2 is disposed at lock position P1.

When locking member 2 moves between lock position P1 and unlock position P2 as described above, fitting part 58a slides with fitted part 22a and fitting part 58b slides with fitted part 22b, and thus rattling in the direction of arrow D, which is the width direction of fitting parts 58a and 58b, is regulated, and it is possible to prevent operation surface 24 from being separated from detection part 41.

Since movement of locking member 2 in a direction including a component of perpendicular direction G to operation surface 24 is regulated by regulation of rattling in direction D, it is possible to suppress separation of detection switch 4 from operation surface 24 of locking member 2 in a direction in which detection switch 4 may be incapable of performing accurate detection. The component of perpendicular direction G to operation surface 24 is a vector component of perpendicular direction G to operation surface 24. Width direction D is a direction including perpendicular direction G to operation surface 24. Further, the direction in which detection switch 4 may be incapable of performing accurate detection is a direction including at least a vector component of the movement direction (see arrow F) of detection part 41 between the ON state and the OFF state.

Note that, a direction that does not include the component of perpendicular direction G of operation surface 24 is a direction which is perpendicular to the paper surface in FIG. 11A and FIG. 11B, and which is parallel to operation surface 24 (see arrow E in FIG. 4). Locking member 2 may move in the direction that does not include the component of perpendicular direction G of operation surface 24 while locking member 2 slightly rattles with respect to detection part 41, within a range in which detection part 41 faces operation surface 24. This case does not affect detection by detection switch 4 since the distance between detection switch 4 and operation surface 24 in direction F does not change.

In the present embodiment, perpendicular direction G of operation surface 24 is inclined with respect to width direction D of fitting parts 58a and 58b in a plan view, but the configuration thereof may not be limited thereto, and perpendicular direction G may be substantially parallel to width direction D. The reason is that rattling of locking member 2 in width direction D is regulated, and thus movement of locking member 2 in perpendicular direction G is regulated.

### (Operation of Locking Device)

First, locking member 2 of locking device 1 is disposed at unlock position P2, and lock pin 21 does not protrude from through-hole 53.

In this state, when power supply plug 111 is inserted into inlet 103 until claw part 113 is hooked to locking projection 104, a driving signal is sent from a control section of the vehicle body to motor 31 of locking device 1.

When motor 31 is rotationally driven, a driving force thereof is transmitted to transmission part 25 of locking member 2 via worm 32, worm gear 33, first transmission gear 34, and second transmission gear 35, and locking member 2 starts to move to lock position P1. When operation surface 24 presses detection part 41 by the movement of locking member 2 to lock position P1, detection part 41 is turned to be in the ON state, and a signal is transmitted from detection switch 4 to the control section on a side of the vehicle body. Then, a driving stop signal is transmitted from the control section to motor 31, the driving of motor 31 stops, and locking member 2 stops at lock position P1. Note that, when locking member 2 is moved from lock position P1 to unlock position P2, the reverse operation to the operation described above is performed. When the pressing force to detection part 41 by operation surface 24 is released and detection part 41 is turned to be in the OFF state, the control section stops motor 31, and locking member 2 stops at unlock position P2.

As described above, by regulating the movement of locking member 2 in the direction including the component of perpendicular direction G to operation surface 24 when locking member 2 moves, it is possible to suppress the separation of detection switch 4 from operation surface 24 of locking member 2 in the direction in which detection switch 4 may be incapable of performing accurate detection.

Accordingly, the position of lock pin 21 can be accurately detected.

Further, in a case where the stroke of locking member 2 is short, detection switch 4 easily fails to perform accurate detection even due to slight rattling when locking member 2 moves, and thus the effect of the present invention can be further exhibited.

Further, groove parts are formed as fitted parts 22a and 22b in locking member 2 and, when locking member 2 moves, fitted parts 22a and 22b slide with guide part 56, and thereby it is possible to regulate the movement of locking member 2 in the direction including the component of perpendicular direction G to operation surface 24.

Further, operation surface 24 faces detection part 41 and is inclined so as to approach detection part 41 as operation surface 24 is away from the side of hole formation part 54, and thereby detection part 41 is pushed by operation surface 24 and the position of locking member 2 can be detected by detection part 41.

Further, fitted parts 22a and 22b are groove parts, and fitting parts 58a and 58b of guide part 56 are ribs, and thereby the groove parts of locking member 2 slide with the ribs when locking member 2 moves. Accordingly, it is possible to regulate the movement of locking member 2 in the direction including the component of perpendicular direction G to operation surface 24, and it is possible to suppress the separation of detection switch 4 from the operation surface of locking member 2 in the direction in which detection switch 4 may be incapable of performing accurate detection.

### Industrial Applicability

The locking device of the present invention exhibits an effect capable of detecting a position of a lock pin accurately, and is useful as a device or the like which locks a power supply cable of a plug-in hybrid electric vehicle, an electric vehicle or the like.

### Reference Signs List

- 1: : Locking device
- 2: : Locking member
- 3: : Driving mechanism
- 4: : Detection switch
- 5: : Housing part
- 21: : Lock pin
- 22a: : Fitted part
- 22b: : Fitted part
- 23a: : Guided part
- 23b: : Guided part
- 24: : Operation surface
- 53: : Through-hole
- 54: : Hole formation part
- 56: : Guide part
- 58a: : Fitting part
- 58b: : Fitting part
- P1: : Lock position
- P2: : Unlock position

## Claims

1. A locking device (1), comprising:
a locking member (2) that is movable between a lock position (P1) and an unlock position (P2), the lock position (P1) being a position where movement of an object is regulated, the unlock position (P2) being a position where regulation of the movement of the object is released;
a driving mechanism (3) that moves the locking member (2);
a detection switch (4) that detects a position of the locking member (2), the detection switch (4) having a detection part (41) that moves in a direction perpendicular to a moving direction of the locking member (2) between the lock position (P1) and the unlock position (P2); and
a housing part (5) that movably supports the locking member (2), wherein:
the housing part (5) includes a guide part (56) that guides movement of the locking member (2),
the locking member (2) includes:
a lock pin (21) that, at least at the lock position (P1), protrudes from a through-hole (53) formed in the housing part (5);
a guided part (23a, 23b) formed along a movement direction of the locking member (2); and
an operation surface (24) that puts the detection part (41) in an ON state or an OFF state in accordance with the movement of the locking member (2), wherein
the guided part (23a, 23b) approaches a hole formation part (54) in accordance with movement of the locking member (2) from the unlock position (P2) to the lock position (P1), the hole formation part (54) being a part in which the through-hole (53) of the housing part (5) is formed,
the guide part (56) extends from the hole formation part (54) in a direction substantially parallel to a movement direction of the locking member (2) from the lock position (P1) toward the unlock position (P2), and
the guide part (56) includes a fitting part (58a, 58b) which is fitted into a fitted part (22a, 22b) of the guided part (23a, 23b) and which, when the locking member(2) moves, regulates movement of the locking member (2) in a direction including a component of a perpendicular direction to the operation surface (24).

2. The locking device (1) according to claim 1, wherein:
the guided part (23a, 23b) is a groove part provided substantially parallel to a movement direction of the lock pin (21), and
the guide part (56) is fitted into the groove part and the guide part (56) slides with the guided part (23a, 23b) when the locking member (2) moves between the unlock position (P2) and the lock position (P1).

3. The locking device according to claim 1 or 2, wherein:
the operation surface (24) faces the detection part (41),
the operation surface (24) is inclined so as to approach the detection part (41) as the operation surface (24) is away from a side of the hole formation part (54), and
when the locking member (2) moves to the lock position (P1), the detection part (41) is pushed by the operation surface (24) to be in the ON state.

4. The locking device (1) according to any one of claims 1 to 3, wherein:
the lock pin (21) includes a leading end part (21a) and a rear end part (21b), the leading end part (21a) engaging with the object that is locked, the rear end part (21b) being provided on a side opposite to the leading end part (21a),
the locking member (2) includes a lock body including a connection part (22c), the connection part (22c) being connected to the rear end part (21b) of the lock pin (21),
the guided part (23a, 23b) is provided in the lock body (22) so as to extend from a side of the connection part (22c) of the lock body (22) toward an opposite side in the movement direction of the locking member (2), and
the operation surface (24) is provided on a side surface (221, 222) of the lock body (22).

5. The locking device (1) according to claim 2, wherein:
the groove part includes an open end part (23c, 23d) in an end part of the locking member (2), the open end part (23c, 23d) having a notch shape, the end part facing the hole formation part (54),
the guide part (56) is a rib erected from the hole formation part (54), and
the groove part has a groove width substantially identical to a thickness of the rib.

## Patentansprüche

1. Verriegelungsvorrichtung (1), umfassend:
ein Verriegelungselement (2), das zwischen einer Verriegelungsposition (P1) und einer Entriegelungsposition (P2) beweglich ist, wobei die Verriegelungsposition (P1) eine Position ist, in der die Bewegung eines Objekts reguliert ist, und die Entriegelungsposition (P2) eine Position ist, in der die Regulierung der Bewegung des Objekts aufgehoben ist,
einen Antriebsmechanismus (3), der das Verriegelungselement (2) bewegt;
einen Erfassungsschalter (4), der eine Position des Verriegelungselements (2) erfasst, wobei der Erfassungsschalter (4) einen Erfassungsteil (41) aufweist, der sich in einer Richtung senkrecht zu einer Bewegungsrichtung des Verriegelungselements (2) zwischen der Verriegelungsposition (P1) und der Entriegelungsposition (P2) bewegt; und
einen Gehäuseteil (5), der das Verriegelungselement (2) beweglich trägt,
wobei:
der Gehäuseteil (5) einen Führungsteil (56) umfasst, der die Bewegung des Verriegelungselements (2) führt,
das Verriegelungselement (2) umfasst:
einen Verriegelungsstift (21), der wenigstens in der Verriegelungsposition (P1) aus einem in dem Gehäuseteil (5) gebildeten Durchgangsloch (53) herausragt;
einen geführten Teil (23a, 23b), der entlang einer Bewegungsrichtung des Verriegelungselements (2) ausgebildet ist; und
eine Betätigungsfläche (24), die den Erfassungsteil (41) in Übereinstimmung mit der Bewegung des Verriegelungselements (2) in einen
EIN-Zustand oder einen AUS-Zustand versetzt,
wobei
der geführte Teil (23a, 23b) sich einem Lochbildungsteil (54) in Übereinstimmung mit der Bewegung des Verriegelungselements (2) von der Entriegelungsposition (P2) in die Verriegelungsposition (P1) nähert, wobei der Lochbildungsteil (54) ein Teil ist, in dem das Durchgangsloch (53) des Gehäuseteils (5) gebildet ist,
der Führungsteil (56) sich von dem Lochbildungsteil (54) in einer Richtung im Wesentlichen parallel zu einer Bewegungsrichtung des Verriegelungselements (2) von der Verriegelungsposition (P1) zu der Entriegelungsposition (P2) erstreckt, und
der Führungsteil (56) einen Pass-Teil (58a, 58b) umfasst, der in einen Pass-Teil (22a, 22b) des geführten Teils (23a, 23b) eingepasst ist und der, wenn das Verriegelungselement (2) sich bewegt, die Bewegung des Verriegelungselements (2) in einer Richtung reguliert, die eine Komponente einer senkrechten Richtung zu der Betätigungsfläche (24) umfasst.

2. Verriegelungsvorrichtung (1) nach Anspruch 1, wobei:
der geführte Teil (23a, 23b) ein Nut-Teil ist, der im Wesentlichen parallel zu einer Bewegungsrichtung des Verriegelungsstifts (21) vorgesehen ist, und
der Führungsteil (56) in den Nut-Teil eingepasst ist und der Führungsteil (56) mit dem geführten Teil (23a, 23b) gleitet, wenn das Verriegelungselement (2) sich zwischen der Entriegelungsposition (P2) und der Verriegelungsposition (P1) bewegt.

3. Verriegelungsvorrichtung nach Anspruch 1 oder 2, wobei:
die Betätigungsfläche (24) dem Erfassungsteil (41) zugewandt ist,
die Betätigungsfläche (24) derart geneigt ist, dass sie sich dem Erfassungsteil (41) nähert, wenn die Betätigungsfläche (24) von einer Seite des Lochbildungsteils (54) entfernt ist, und,
wenn das Verriegelungselement (2) sich in die Verriegelungsposition (P1) bewegt, der Erfassungsteil (41) durch die Betätigungsfläche (24) in den EIN-Zustand gedrückt wird.

4. Verriegelungsvorrichtung (1) nach einem der Ansprüche 1 bis 3, wobei:
der Verriegelungsstift (21) einen vorderen Endteil (21a) und einen hinteren Endteil (21b) aufweist, wobei der vordere Endteil (21a) mit dem verriegelten Objekt in Eingriff steht und der hintere Endteil (21b) an einer dem vorderen Endteil (21a) entgegengesetzten Seite vorgesehen ist,
das Verriegelungselement (2) einen Verriegelungskörper mit einem Verbindungsteil (22c) aufweist, wobei der Verbindungsteil (22c) mit dem hinteren Endteil (21b) des Verriegelungsstifts (21) verbunden ist,
der geführte Teil (23a, 23b) in dem Verriegelungskörper (22) derart vorgesehen ist, dass er sich von einer Seite des Verbindungsteils (22c) des Verriegelungskörpers (22) zu einer gegenüberliegenden Seite in der Bewegungsrichtung des Verriegelungselements (2) erstreckt, und
die Betätigungsfläche (24) an einer Seitenfläche (221, 222) des Verriegelungskörpers (22) vorgesehen ist.

5. Verriegelungsvorrichtung (1) nach Anspruch 2, wobei:
der Nut-Teil einen offenen Endteil (230, 23d) in einem Endteil des Verriegelungselements (2) umfasst, wobei der offene Endteil (23c, 23d) eine Kerbenform aufweist, wobei der Endteil dem Lochbildungsteil (54) zugewandt ist,
der Führungsteil (56) eine Rippe ist, die aus dem Lochbildungsteil (54) aufgerichtet ist, und
der Nut-Teil eine Nutbreite aufweist, die im Wesentlichen identisch zu einer Dicke der Rippe ist.

## Revendications

1. Dispositif de verrouillage (1), comprenant:
un élément de verrouillage (2) qui est mobile entre une position de verrouillage (P1) et une position de déverrouillage (P2), la position de verrouillage (P1) étant une position où le déplacement d'un objet est régulé, la position de déverrouillage (P2) étant une position où la régulation du déplacement de l'objet est libérée;
un mécanisme d'entraînement (3) qui déplace l'élément de verrouillage (2);
un commutateur de détection (4) qui détecte une position de l'élément de verrouillage (2), le commutateur de détection (4) ayant une partie de détection (41) qui se déplace dans une direction perpendiculaire à une direction de déplacement de l'élément de verrouillage (2) entre la position de verrouillage (P1) et la position de déverrouillage (P2); et
une partie de boîtier (5) qui supporte de manière mobile l'élément de verrouillage (2), dans lequel:
la partie de boîtier (5) comprend une partie de guidage (56) qui guide le déplacement de l'élément de verrouillage (2),
l'élément de verrouillage (2) comprend:
une goupille de verrou (21) qui, au moins au niveau de la position de verrouillage (P1), fait saillie à partir d'un trou traversant (53) formé dans la partie de boîtier (5);
une partie guidée (23a, 23b) formée le long d'une direction de déplacement de l'élément de verrouillage (2); et
une surface d'actionnement (24) qui met la partie de détection (41) dans un état MARCHE ou un état ARRÊT conformément au déplacement de l'élément de verrouillage (2), dans lequel
la partie guidée (23a, 23b) s'approche d'une partie de formation de trou (54) conformément au déplacement de l'élément de verrouillage (2) de la position de déverrouillage (P2) à la position de verrouillage (P1), la partie de formation de trou (54) étant une partie dans laquelle le trou traversant (53) de la partie de boîtier (5) est formé,
la partie de guidage (56) s'étend depuis la partie de formation de trou (54) dans une direction sensiblement parallèle à une direction de déplacement de l'élément de verrouillage (2) de la position de verrouillage (P1) à la position de déverrouillage (P2), et
la partie de guidage (56) comprend une partie d'ajustement (58a, 58b) qui est ajustée dans une partie ajustée (22a, 22b) de la partie guidée (23a, 23b) et qui, lorsque l'élément de verrouillage (2) se déplace, régule le déplacement de l'élément de verrouillage (2) dans une direction comprenant une composante d'une direction perpendiculaire à la surface d'actionnement (24).

2. Dispositif de verrouillage (1) selon la revendication 1, dans lequel:
la partie guidée (23a, 23b) est une partie de rainure prévue sensiblement parallèlement à une direction de déplacement de la goupille de verrou (21), et
la partie de guidage (56) est ajustée dans la partie de rainure et la partie de guidage (56) coulisse avec la partie guidée (23a, 23b) lorsque l'élément de verrouillage (2) se déplace entre la position de déverrouillage (P2) et la position de verrouillage (P1).

3. Dispositif de verrouillage selon la revendication 1 ou 2, dans lequel:
la surface d'actionnement (24) fait face à la partie de détection (41),
la surface d'actionnement (24) est inclinée de manière à approcher la partie de détection (41) lorsque la surface d'actionnement (24) est éloignée d'un côté de la partie de formation de trou (54), et
lorsque l'élément de verrouillage (2) se déplace vers la position de verrouillage (P1), la partie de détection (41) est poussée par la surface d'actionnement (24) pour être dans l'état MARCHE.

4. Dispositif de verrouillage (1) selon l'une quelconque des revendications 1 à 3, dans lequel :
la goupille de verrou (21) comprend une partie d'extrémité avant (21a) et une partie d'extrémité arrière (21b), la partie d'extrémité avant (21a) venant en prise avec l'objet qui est verrouillé, la partie d'extrémité arrière (21b) étant prévue sur un côté opposé à la partie d'extrémité avant (21a),
l'élément de verrouillage (2) comprend un corps de verrouillage comprenant une partie de connexion (22c), la partie de connexion (22c) étant connectée à la partie d'extrémité arrière (21b) de la goupile de verrou (21),
la partie guidée (23a, 23b) est prévue dans le corps de verrou (22) de manière à s'étendre depuis un côté de la partie de connexion (22c) du corps de verrou (22) vers un côté opposé dans la direction de déplacement de l'élément de verrouillage (2), et
la surface d'actionnement (24) est prévue sur une surface latérale (221, 222) du corps de verrou (22).

5. Dispositif de verrouillage (1) selon la revendication 2, dans lequel:
la partie de rainure comprend une partie d'extrémité ouverte (23c, 23d) dans une partie d'extrémité de l'élément de verrouillage (2), la partie d'extrémité ouverte (23c, 23d) ayant une forme d'encoche, la partie d'extrémité faisant face à la partie de formation de trou (54),
la partie de guidage (56) est une nervure érigée à partir de la partie de formation de trou (54), et
la partie de rainure a une largeur de rainure sensiblement identique à une épaisseur de la nervure.
